# EUROPÄISCHE PATENTSCHRIFT

(11) **EP 0 984 734 B1**
(45) Veröffentlichungstag und Bekanntmachung des Hinweises auf die Patenterteilung: **17.08.2005**
(21) Anmeldenummer: 97949902.7
(22) Anmeldetag: 06.11.1997
(51) Int. Cl.: A61C 8/00

(54) **KONUSFÖRMIGES IMPLANTAT**
CONICAL IMPLANT
IMPLANT CONIQUE

(30) Priorität: 29.04.1997 DE 19718175
(43) Veröffentlichungstag der Anmeldung: 15.03.2000
(73) Patentinhaber: Camlog Biotechnologies AG, 4051 Basel (CH)
(72) Erfinder: KIRSCH, Axel, D-70184 Stuttgart (DE); SCHERBERGER, Rolf, D-75217 Birkenfeld (DE)
(74) Vertreter: Müller, Christoph Emanuel
(86) Internationale Anmeldenummer: PCT/DE1997/002623
(87) Internationale Veröffentlichungsnummer: WO 1998/048726

(56) Entgegenhaltungen:
- EP-A- 0 373 734
- GB-A- 2 199 626
- US-A- 5 205 745

## Beschreibung

Die Erfindung betrifft ein Implantat mit einem in einem Knochenmaterial implantierbaren Grundkörper, der eine zu seinem koronalen Ende hin offene Blindbohrung zur Aufnahme eines Implantatpfostens aufweist. Sie betrifft insbesondere ein Implantat für den oralen Bereich, wie ein Zahnimplantat.

Bei den bekannten Implantaten weist der Grundkörper, der entweder glatt oder mit einem außenschraubgewinde versehen sein kann, über seiner Länge einen in wesentlichen konstanten Querschnitt auf. Diese Geometrie hat sich zwar allgemein bewährt, führt jedoch bei Implantaten im Seitenzahnbereich wegen der dort auftretenden größeren auf das Implantat wirkenden Kräfte dazu, daß für eine stabile Verankerung des Implantataufbaus ein vergleichsweise großer Durchmesser des Grundkörpers erforderlich ist. Dies erfordert wiederum eine größere Entnahme von Knochengewebe zum Einsetzen des Grundkörpers in den Knochen.

US-PS 5 205 745 beschreibt ein mehrteiliges Einzelzahnimplantat, bei dem der Grundkörper zwei zylindrische Abschnitte aufweist, die durch einen konischen Abschnitt miteinander verbunden sind, wobei der zervikal liegende Abschnitt einen kleineren Außendurchmesser aufweist als der koronal liegende Abschnitt. Diese Druckschrift schlägt vor, den Abstand zwischen dem koronalen Ende des Grundkörpers und dem koronalen Ende des zervikal liegenden zylindrischen Abschnitts im Bereich zwischen 2 und 4 mm zu wählen.

Es ist die Aufgabe der Erfindung, ein Implantat der eingangs beschriebenen Art zu schaffen, bei dem eine stabile Verankerung des Implantataufbaus mit einer geringeren Beschädigung des Knochengewebes des Patienten möglich ist.

Diese Aufgabe wird erfindungsgemäß durch ein Implantat gelöst, welches einen in einem Knochenmaterial implantierbaren Grundkörper mit einer zu dessen koronalen Ende hin offenen Blindbohrung zur Aufnahme eines Implantatpfostens aufweist, wobei der Grundkörper, bezogen auf seine Längsrichtung, einen ersten Abschnitt, der das zervikale Ende des Grundkörpers bildet, sowie einen zweiten, an den ersten Abschnitt an dessen koronalem Ende anschließenden Abschnitt aufweist, in dem sich der Außendurchmesser in Richtung zu dem koronalen Ende des Grundkörpers hin vergrößert und der Außendurchmesser sich in dem ersten Abschnitt bezüglich der Längsrichtung des Grundkörpers nicht wesentlich oder zumindest weniger stark als in dem zweiten Abschnitt ändert und der erste Abschnitt vorzugsweise frei von einem Gewinde ist, und der Grundkörper weiterhin einen dritten, im wesentlichen zylinderförmigen Abschnitt aufweist, der an den zweiten Abschnitt in der Richtung zu dem koronalen Ende hin anschließt, wobei der Außendurchmesser des ersten Abschnitts über seiner gesamten Länge kleiner als der Außendurchmesser des dritten Abschnitts ist und der dritte, im wesentlichen zylinderförmige Abschnitt des Grundkörpers mit einem vorzugsweise selbstschneidenden Außenschraubgewinde versehen ist, wobei sich der Schutzumfang nicht auf ein Implantat gemäß Anspruch 1 des deutschen Patents 195 34 979 erstrecken soll. Anspruch 1 dieses Patents umschreibt ein enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, einer an den koronalen Stirnrand des Grundkörpers verdrehgesichert ansetzbaren Distanzhülse, die einen zervikalen Zentrierbund aufweist, der in eine am koronalen Ende des Grundkörpers vorgesehene hohlzylindrische Ringausnehmung einsetzbar ist, eine in koronaler Richtung an den Zentrierbund anschließende, auf den koronalen Stirnrand des Grundkörpers aufsetzbare Schulter aufweist und mit einer zu ihrem koronalen Ende offenen Bohrung zur Aufnahme des Implantatpfostens versehen ist, wobei eine Verbindungseinrichtung zum verdrehgesicherten Verbinden der Distanzhülse mit dem Grundkörper dadurch gebildet ist, daß die hohlzylindrische Ringausnehmung des Grundkörpers mindestens ein in Umfangsrichtung wirksames Grundkörper-Formschlußelement und der Zentrierbund der Distanzhülse mindestens ein zu dem/den Grundkörper-Formschlußelement(en) komplementäres Distanzhülsen-Formschlußelement aufweist, einem in die Blindbohrung des Grundkörpers direkt oder indirekt einsetzbaren und die Distanzhülse zumindest teilweise durchsetzenden Implantatpfosten und einem Befestigungskopf für den Zahnersatz, wobei das/die Grundkörper-Formschlußelement(e) an der Innenwandung der Ringausnehmung in einem Formschlußbereich derselben unmittelbar im Anschluß an den Stirnrand des Grundkörpers vorgesehen ist/sind; wobei (eine) der Längsmittelachse der Ringausnehmung nächstliegende(n) Führungsfläche(n) des Formschlußbereiches auf einer Zylinderfläche liegt/liegen, deren Durchmesser demjenigen eines sich zervikal an den Formschlußbereich anschließenden Führungsbereiches der Ringausnehmung mit im wesentlichen glatter Umfangswandung entspricht; wobei an den Führungsbereich der Ringausnehmung zervikal ein Zentrierbereich der Ringausnehmung mit gegenüber dem Führungsbereich verringertem Durchmesser anschließt; wobei das/die Distanzhülsen-Formschlußelement(e) zervikal im Anschluß an die Schulter der Distanzhülse an der zylindrischen Außenwandung des Zentrierbundes in einem Formschlußabschnitt desselben vorgesehen ist/sind; wobei die radial am nächsten zur Längsmittelachse des Zentrierbundes liegende(n) Umfangsfläche(n) des Formschlußabschnittes auf einer Zylinderfläche liegen, deren Durchmesser im wesentlichen dem Innendurchmesser des Führungsbereiches des Grundkörpers entspricht; wobei an den Formschlußabschnitt zervikal ein zylindrischer Führungsabschnitt anschließt, dessen Außendurchmesser im wesentlichen dem Innendurchmesser des Führungsbereiches des Grundkörpers entspricht; und wobei an den Führungsabschnitt zervikal ein zylinderförmiger Zentrierabschnitt anschließt, dessen Außendurchmesser im wesentlichen mit dem Innendurchmesser des Zentrierbereiches des Grundkörpers übereinstimmt.

Dabei können der erste Abschnitt im wesentlichen zylinderförmig und der zweite Abschnitt im wesentlichen konusförmig sein. Der erste Abschnitt kann Aussparungen jeglicher Geometrie, beispielsweise die üblichen Lakunen, bei einem ansonsten im wesentlichen konstanten Außendurchmesser aufweisen.

Es kann weiterhin vorgesehen sein, daß der Abstand zwischen dem koronalen Ende des Grundkörpers und dem koronalen Ende des ersten Abschnitts in einem Bereich zwischen 4 mm und 7 mm liegt.

Der Außendurchmesser des Grundkörpers kann an seinem zervikalen Ende 65 % bis 85 %, vorzugsweise 70 % bis 75 % des Außendurchmessers an seinem koronalen Ende betragen.

Der Abstand zwischen dem koronalen Ende des Grundkörpers und dem koronalen Ende des ersten Abschnitts kann in einem Bereich zwischen 4 mm bis 7 mm, vorzugsweise bei ungefähr 6,5 mm liegen.

Die Erfindung kann weiterhin vorsehen, daß der Konuswinkel α des zweiten Abschnitts in einem Bereich von 25° bis 50°, vorzugsweise in einem Bereich von 30° bis 45° liegt.

Der erste, zweite und ggf. dritte Abschnitt können jeweils unterschiedlich bearbeitet und/oder beschichtet sein, wobei insbesondere ihre Oberfläche jeweils unterschiedlich ausgebildet sein kann. Beispielsweise können ein oder zwei der Abschnitte eine glatte Oberfläche aufweisen und der oder die verbleibenden Abschnitte eine rauhe Oberfläche. Der dritte Abschnitt weist, wenn er mit einem Außengewinde ausgeführt ist, vorzugsweise eine mit einer Ätztechnik erzeugte rauhe Oberfläche auf, während der erste und zweite Abschnitt vorzugsweise mit einer Titanplasmabeschichtung versehen sind.

Weiterhin kann vorgesehen sein, daß die Blindbohrung in dem Grundkörper mehrere koaxiale, im wesentlichen zylinderförmige Abschnitte aufweist, deren Innendurchmesser von dem koronalen Ende zu dem zervikalen Ende hin abnimmt.

Erfindungsgemäß kann die Blindbohrung in dem Grundkörper in dem Bereich des dritten Abschnitts einen größeren Innendurchmesser als in dem ersten Abschnitt aufweisen.

Weiterhin kann der Innendurchmesser der Blindbohrung in dem vorzugsweise konusartigen zweiten Abschnitt zwischen dem Innendurchmesser der Blindbohrung in dem dritten Abschnitt des Grundkörpers und demjenigen in dem ersten Abschnitt des Grundkörpers liegen.

Die Erfindung sieht weiterhin Formschlußelemente zur Sicherung eines an dem Grundkörper befestigten Aufbaus gegen Verdrehung bezüglich des Grundkörpers vor, welche insbesondere unmittelbar im Anschluß an die koronale Stirnwand des Grundkörpers vorgesehen sein können.

Die Erfindung beruht auf der Erkenntnis, daß zum sicheren Verankern eines Implantataufbaus auch bei Auftreten größerer Kräfte, wie sie im Seitenzahnbereich auftreten, ein vergleichsweise großer Durchmesser des Grundkörpers nur im Bereich der harten Corticalis erforderlich ist, während im Bereich der Spongiosa eine geringere Querschnittsfläche ausreicht. Dementsprechend entspricht die Länge des Abschnitts des Grundkörpers mit einem größeren Außendurchmesser vorteilhafterweise in etwa der Dicke der Corticalis. Zur besseren Verankerung des Grundkörpers in der Corticalis kann ein vorzugsweise selbstschneidendes Außengewinde in dem verdickten dritten Abschnitt dienen.

Weitere Merkmale und Vorteile der Erfindung ergeben sich aus der folgenden Beschreibung von Ausführungsbeispielen der Erfindung mit Bezug auf die beigefügten Zeichnungen.
- Fig. 1: zeigt eine Seitenansicht einer ersten Ausführungsform des erfindungsgemäßen Implantats.
- Fig. 2: zeigt einen Längsschnitt des in Fig. 1 dargestellten Implantats.
- Fig. 3: zeigt eine Vorderansicht eines zweiten Ausführungsbeispiels des erfindungsgemäßen Implantats.
- Fig. 4: zeigt einen Längsschnitt des Implantats der Ausführungsform der Fig. 3.

In der nachfolgenden Beschreibung sind gleiche und gleichwirkende Bestandteile mit denselben Bezugszeichen versehen.

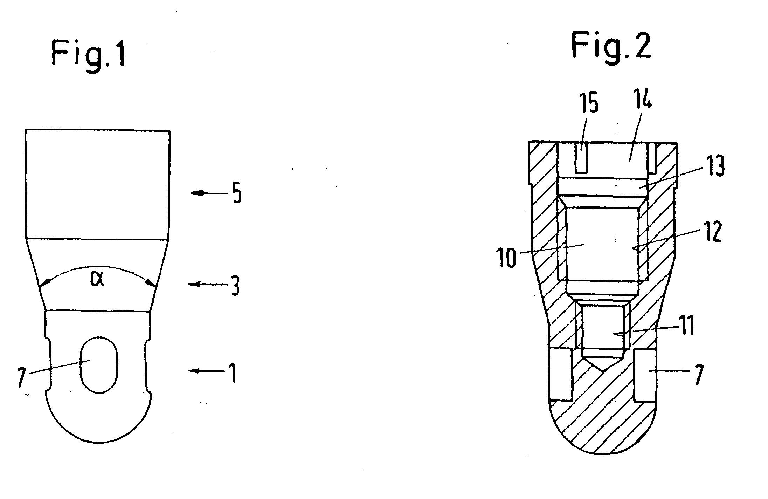

Bezugnehmend auf Fig. 1 weist der Grundkörper des Implantats in Abfolge von dem zervikalen Ende zu dem koronalen Ende drei Hauptabschnitte auf, nämlich einen ersten zylinderförmigen Abschnitt 1, einen konusartigen Übergangsabschnitt 3 sowie einen zweiten zylinderartigen Abschnitt 5, wobei der Außendurchmesser des Abschnitts 5 größer als derjenige des Abschnitts 1 ist und der Außendurchmesser des Abschnitts 2 sich kontinuierlich, beispielsweise konisch oder entlang einer gekrümmten Kurve, die z. B. hyperbolisch oder kreisbogenförmig sein kann, von dem größeren Durchmesser des Abschnitts 5 zu dem kleineren Durchmesser des Abschnitts 1 verkleinert. In dem ersten zylinderartigen Abschnitt 1 sind in bekannter Weise ovalförmige Vertiefungen 7, sogenannte Lakunen, ausgebildet, in die zur besseren Verankerung beim Einheilen Knochenmaterial einwachsen kann. Die Länge zwischen dem koronalen Ende des Abschnitts 5 und dem zervikalen Ende des Abschnitts 3 beträgt bei diesem Ausführungsbeispiel in etwa 6,5 mm, während die Länge des Abschnitts 1 je nach Anwendung variieren kann und beispielsweise zwischen 5 mm und 11 mm liegen kann und typischerweise 1/2 bis 2/3 der Gesamtlänge des Grundkörpers beträgt. Bei dem dargestellten Ausführungsbeispiel beträgt der Außendurchmesser des Abschnitts 1 in etwa 5,4 mm und der Außendurchmesser des Abschnitts 5 in etwa 4 mm, wobei der Konuswinkel α des Abschnitts 3 ungefähr 30° beträgt.

Wie aus der Schnittansicht der Fig. 2 hervorgeht, weist der in Fig. 1 dargestellte Grundkörper eine Blindbohrung 10 zur Aufnahme eines Implantatpfostens und einer Distanzhülse auf, wie sie in dem deutschen Patent 195 34 979 C1 beschrieben sind, auf die hinsichtlich weiterer Einzelheiten verwiesen wird. In Übereinstimmung mit der Lehre dieser Druckschrift weist die Blindbohrung ein erstes und zweites Innengewinde 11 bzw. 12 auf, wobei das Innengewinde 11 einen kleineren Durchmesser als das Innengewinde 12 besitzt und im wesentlichen in dem Abschnitt 1 liegt. An das Innengewinde 12
schließt sich ein Führungsbereich 13 an, der in dem Abschnitt 5 liegt und dessen Innendurchmesser größer als der Innendurchmesser der Gewinde 11 und 12 ist. An den Führungsabschnitt 13 schließt sich in Richtung zu dem koronalen Ende hin ein Formschlußabschnitt 14 an, welcher mehrere Formschlußausnehmungen 15 zum Zusammenwirken mit komplementären Formschlußelementen einer Distanzhülse aufweist, die in den in Fig. 1 und 2 dargestellten Grundkörper eingesetzt werden und durch die hindurch ein Implantatpfosten in den Grundkörper eingeführt und mittels des Innengewindes 11 verankert werden kann. Vorzugsweise sind drei oder vier halbkreisförmige oder viereckige Ausnehmungen 15 vorhanden. Hinsichtlich weiterer Einzelheiten hinsichtlich der Formschlußverbindung wird auf die DE 195 34 979 C1 verwiesen.

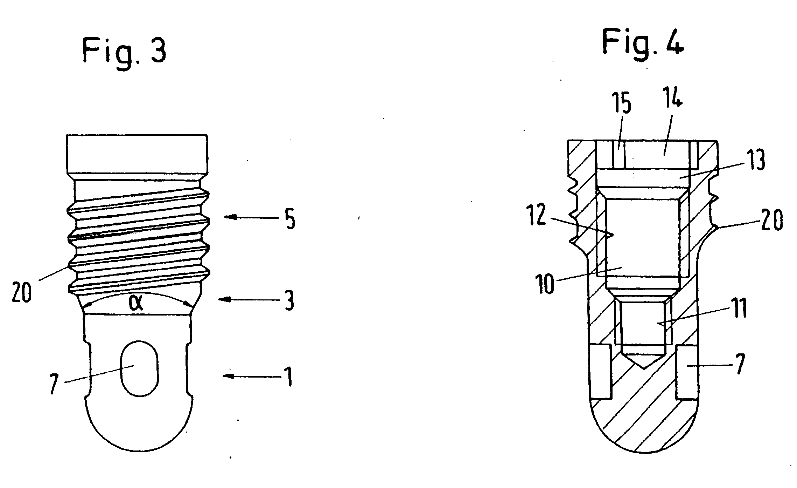

Die in den Fig. 3 und 4 dargestellte zweite Ausführungsform des Grundkörpers des erfindungsgemäßen Implantats entspricht im wesentlichen dem in Fig. 1 und 2 dargestellten Grundkörper. Im Unterschied zu der Ausführungsform der Fig. 1 und 2 ist jedoch hier der erste zylinderförmige Abschnitt 5 mit einem selbstschneidenden Außengewinde 20 versehen, das unterhalb des koronalen Endes in etwa auf der Höhe des Führungsabschnitts 13 einsetzt und sich bis zum Beginn des konusartigen Abschnitts 3 erstreckt. Der Nenndurchmesser des Außengewindes 20 entspricht dabei dem Außendurchmesser des gewindefreien Teils des Abschnitts 5 an dessen koronalem Ende, wobei die Gewindetiefe ungefähr 1/6 dieses Außendurchmessers beträgt, also bei einem Außendurchmesser von 5,4 mm etwa 0,9 mm. Der konische Übergangsbereich ist hier etwas kürzer ausgebildet. Der Konuswinkel α liegt, bei einem Übergang von einem Außendurchmesser bzw. Nenndurchmesser des Gewindes 20 von 5,4 mm auf 4 mm, bei etwa 45°.

Die in der bevorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Implantat, welches einen in einem Knochenmaterial implantierbaren Grundkörper mit einer zu dessen koronalen Ende hin offenen Blindbohrung (10) zur Aufnahme eines Implantatpfostens aufweist, wobei der Grundkörper, bezogen auf seine Längsrichtung, einen ersten Abschnitt (1), der das zervikale Ende des Grundkörpers bildet, sowie einen zweiten, an den ersten Abschnitt (1) an dessen koronalem Ende anschließenden Abschnitt (3) aufweist, in dem sich der Außendurchmesser in Richtung zu dem koronalen Ende des Grundkörpers hin vergrößert, wobei der Außendurchmesser des ersten Abschnitts (1) sich bezüglich der Längsrichtung des Grundkörpers nicht oder weniger stark als in dem zweiten Abschnitt (3) ändert, der erste Abschnitt (1) frei von einem Gewinde ist und der Grundkörper weiterhin einen dritten, im wesentlichen zylinderförmigen Abschnitt (5) aufweist, der an den zweiten Abschnitt (3) in der Richtung zu dem koronalen Ende hin anschließt, wobei der Außendurchmesser des ersten Abschnitts (1) über seiner gesamten Länge kleiner als der Außendurchmesser des dritten Abschnitts (5) ist, **dadurch gekennzeichnet, daß** der dritte, im wesentlichen zylinderförmige Abschnitt (5) des Grundkörpers an seiner Außenseite mit einem Außengewinde versehen ist.

2. Implantat nach Anspruch 1, **dadurch gekennzeichnet, daß** der erste Abschnitt (1) im wesentlichen zylinderförmig und der zweite Abschnitt (3) im wesentlichen konusförmig ist.

3. Implantat nach Anspruch 1 oder 2, **dadurch gekennzeichnet, daß** der Abstand zwischen dem koronalen Ende des Grundkörpers und dem koronalen Ende des ersten Abschnitts (1) in einem Bereich zwischen 4 mm und 7 mm liegt.

4. Implantat nach einem der Ansprüche 1 bis 3, **dadurch gekennzeichnet, daß** der Außendurchmesser des Grundkörpers an seinem zervikalen Ende 65 % bis 85 % des Außendurchmessers an seinem koronalen Ende beträgt.

5. Implantat nach einem der Ansprüche 2 bis 4, **dadurch gekennzeichnet, daß** der Konuswinkel (α) des zweiten Abschnitts (3) in einem Bereich von 25° bis 50° liegt.

6. Implantat nach einem der Ansprüche 1 bis 5, **dadurch gekennzeichnet, daß** die Blindbohrung (10) in dem Grundkörper mehrere koaxiale, im wesentlichen zylinderförmige Abschnitte aufweist, deren Innendurchmesser von dem koronalen Ende zu dem zervikalen Ende hin abnimmt.

7. Implantat nach einem der Ansprüche 1 bis 6, **dadurch gekennzeichnet, daß** die Blindbohrung (10) in dem Grundkörper in dem Bereich des dritten Abschnitts (5) einen größeren Innendurchmesser als in dem ersten Abschnitt (1) aufweist.

8. Implantat nach Anspruch 7, **dadurch gekennzeichnet, daß** der Innendurchmesser der Blindbohrung (10) in dem zweiten Abschnitt (3) zwischen dem Innendurchmesser der Blindbohrung in dem dritten Abschnitt (5) des Grundkörpers und demjenigen des ersten Abschnitts (1) des Grundkörpers liegt.

9. Implantat nach einem der Ansprüche 1 bis 8, **gekennzeichnet durch** Formschlußelemente zur Sicherung eines an dem Grundkörper befestigten Aufbaus gegen Verdrehung bezüglich des Grundkörpers.

## Claims

1. An implant having a base body which can be implanted in bone material and which has a blind bore (10) open towards its coronal end for receiving an implant post, wherein the base body, in relation to its longitudinal direction, has a first portion (1) which forms the cervical end of the base body and a second portion (3) which adjoins the first portion (1) at the coronal end thereof and in which the outside diameter increases in the direction towards the coronal end of the base body, wherein the outside diameter of the first portion (1) in relation to the longitudinal direction of the base body does not change or changes less greatly than in the second portion (3), the first portion (1) is free of a screwthread and the base body further has a third substantially cylindrical portion (5) which adjoins the second portion (3) in a direction towards the coronal end, wherein the outside diameter of the first portion (1) over the entire length thereof is less than the outside diameter of the third portion (5), **characterised in that** the third substantially cylindrical portion (5) of the base body is provided at its outside with a male screwthread.

2. An implant according to claim 1 **characterised in that** the first portion (1) is substantially cylindrical and the second portion (3) is substantially conical.

3. An implant according to claim 1 or claim 2 **characterised in that** the spacing between the coronal end of the base body and the coronal end of the first portion (1) is in a range of between 4 mm and 7 mm.

4. An implant according to one of claims 1 to 3 **characterised in that** the outside diameter of the base body at its cervical end is 65% to 85% of the outside diameter at its coronal end.

5. An implant according to one of claims 2 to 4 **characterised in that** the cone angle (α) of the second portion (3) is in a range of 25° to 50°.

6. An implant according to one of claims 1 to 5 **characterised in that** the blind bore (10) in the base body has a plurality of coaxial, substantially cylindrical portions, the inside diameter of which decreases from the coronal end towards the cervical end.

7. An implant according to one of claims 1 to 6 **characterised in that** the blind bore (10) in the base body is of a larger inside diameter in the region of the third portion (5) than in the first portion (1).

8. An implant according to claim 7 **characterised in that** the inside diameter of the blind bore (10) in the second portion (3) is between the inside diameter of the blind bore in the third portion (5) of the base body and that of the first portion (1) of the base body.

9. An implant according to one of claims 1 to 8 **characterised by** positively locking elements for securing a fitment fixed to the main body against rotation with respect to the base body.

## Revendications

1. Implant qui comprend un corps de base apte à être implanté dans une matière osseuse et pourvu d'un trou borgne (10) qui est ouvert vers l'extrémité coronaire dudit corps de base et qui est destiné à recevoir une tige d'implant, le corps de base comprenant dans le sens longitudinal une première section (1) qui forme son extrémité cervicale, et une deuxième section (3) qui fait suite à la première section (1), à l'extrémité coronaire du corps de base, et dans laquelle le diamètre extérieur va en augmentant en direction de ladite extrémité coronaire du corps de base, le diamètre extérieur de la première section (1) ne variant pas, ou plus faiblement que dans la deuxième section (3) par rapport au sens longitudinal du corps de base, la première section (1) étant sans filetage, et le corps de base ayant aussi une troisième section (5), sensiblement cylindrique, qui fait suite à la deuxième section (3) en direction de l'extrémité coronaire, le diamètre extérieur de la première section (1) étant plus petit, sur toute sa longueur, que le diamètre extérieur de la troisième section (5), **caractérisé en ce que** la troisième section (5) sensiblement cylindrique du corps de base est pourvue d'un filetage extérieur sur son côté extérieur.

2. Implant selon la revendication 1, **caractérisé en ce que** la première section (1) est sensiblement cylindrique et la deuxième section (3) est sensiblement conique.

3. Implant selon la revendication 1 ou 2, **caractérisé en ce que** la distance entre l'extrémité coronaire du corps de base et l'extrémité coronaire de la première section (1) se trouve dans une plage située entre 4 mm et 7 mm.

4. Implant selon l'une des revendications 1 à 3, **caractérisé en ce que** le diamètre extérieur du corps de base, à son extrémité cervicale, représente 65 % à 85 % du diamètre extérieur de son extrémité coronaire.

5. Implant selon l'une des revendications 2 à 4, **caractérisé en ce que** l'angle de cône (α) de la deuxième section (3) est situé dans une plage de 25° à 50°.

6. Implant selon l'une des revendications 1 à 5, **caractérisé en ce que** le trou borgne (10) du corps de base comprend plusieurs sections coaxiales sensiblement cylindriques dont le diamètre intérieur va en diminuant de l'extrémité coronaire vers l'extrémité cervicale.

7. Implant selon l'une des revendications 1 à 6, **caractérisé en ce que** le trou borgne (10) du corps de base présente un plus grand diamètre intérieur dans la zone de la troisième section (5) que dans la première section (1).

8. Implant selon la revendication 7, **caractérisé en ce que** le diamètre intérieur du trou borgne (10) dans la deuxième section (3) est situé entre le diamètre intérieur du trou borgne de la troisième section (5) du corps de base et celui de la première section (1) du corps de base.

9. Implant selon l'une des revendications 1 à 8, **caractérisé par** des éléments à complémentarité de forme destinés à empêcher une structure fixée au corps de base de tourner par rapport à celui-ci.
